# EUROPEAN PATENT APPLICATION

(11) **EP 1 933 527 A2**
(43) Date of publication of application: **18.06.2008**
(21) Application number: 07113594.1
(22) Date of filing: 01.08.2007
(51) Int. Cl.: H04L 29/06

(54) **Information processing method and system**

(30) Priority: 14.12.2006 JP 2006337584
(71) Applicant: CANON KABUSHIKI KAISHA, Ohta-ku Tokyo 146-8501 (JP)
(72) Inventor: Suwabe, Takeshi, Tokyo Tokyo 146-8501 (JP)
(74) Representative: TBK-Patent

(57) **Abstract**

The latest information on a diverse range of services on a network is constantly acquired. To accomplish this, services from a plurality of service providing apparatuses 101, 102 and 103 on a network are provided to a service using apparatus 100. Synchronous data that describes the functions of the plurality of service providing apparatuses 101, 102 and 103 using a markup language is generated and registered. The registered synchronous data is updated if there is a change in the functions of any of the service providing apparatuses. The service using apparatus 100 acquires the registered synchronous data updated as required, generates a service list based on the acquired synchronous data, and displays the generated service list.

## Description

### BACKGROUND OF THE INVENTION

### Field of the Invention

The present invention relates to a technique for searching for services over a network.

### Description of the Related Art

Heretofore, there exist network systems having a plurality of information devices connected thereto that enable desired services to be enjoyed from an apparatus on a network as a result of an operation performed on a client apparatus. In a conventional system, service providing apparatuses organize their functions as services, and register those services in a service management server. The service management server centrally manages a diverse range of services that are at a plurality of locations, provides information on this service group in response to access from a service using apparatus, and provides services that the user wants to use (Japanese Patent Laid-Open No. 2001-109693).

However, with conventional technology, the information on a diverse range of services at a plurality of locations that is collected when a search is made sometimes differs from the reality of the service when the user actually comes to use it due to time lag.

### SUMMARY OF THE INVENTION

The present invention enables the latest information on a diverse range of services on a network to be constantly acquired.

The present invention is realized, for example, on the information processing method as specified in claims 1 to 4.

Furthermore, the present invention is realized, for example, on an information processing system as specified in claim 5.

Furthermore, the present invention is realized, for example, on a computer-readable storage medium as specified in claim 6.

Further features of the present invention will become apparent from the following description of exemplary embodiments with reference to the accompanying drawings.

### BRIEF DESCRIPTION OF THE DRAWINGS

FIG. 1 illustrates an exemplary system configuration according to the present invention.

FIG. 2 illustrates an apparatus which uses exemplary services according to the present invention.

FIG. 3 illustrates an exemplary conventional system configuration.

FIG. 4 illustrates an exemplary system configuration according to the present invention.

FIG. 5 illustrates an exemplary system configuration according to the present invention.

FIG. 6 illustrates an exemplary flowchart according to the present invention.

FIG. 7 illustrates an exemplary flowchart according to the present invention.

FIG. 8 illustrates an exemplary flowchart according to the present invention.

FIG. 9 illustrates exemplary syndication data according to the present invention.

FIG. 10 illustrates exemplary data for registering service information according to the present invention.

FIG. 11 illustrates exemplary syndication data according to the present invention.

FIG. 12 illustrates exemplary syndication data according to the present invention.

FIG. 13 illustrates exemplary data for searching for service information according to the present invention.

FIG. 14 illustrates exemplary data for searching for service information according to the present invention.

FIG. 15 illustrates an exemplary service list according to the present invention.

FIG. 16 illustrates an exemplary console unit (service list display) according to the present invention.

FIG. 17 illustrates exemplary syndication data according to the present invention.

FIG. 18 illustrates exemplary syndication data according to the present invention.

FIG. 19 illustrates exemplary syndication data according to the present invention.

FIG. 20 illustrates an exemplary service list according to the present invention.

FIG. 21 illustrates an exemplary console unit (service list display) according to the present invention.

FIG. 22 illustrates an exemplary Web browser display on a PC according to the present invention.

### DESCRIPTION OF THE EMBODIMENTS

A preferred embodiment of the present invention will now be described in detail with reference to the drawings. Note that the relative arrangement of the components, the numerical expressions and numerical values set forth in these embodiments do not limit the scope of the present invention unless it is specifically stated otherwise.

Note that in this specification a service indicates a function that a service providing apparatus is able to provide to a service using apparatus.

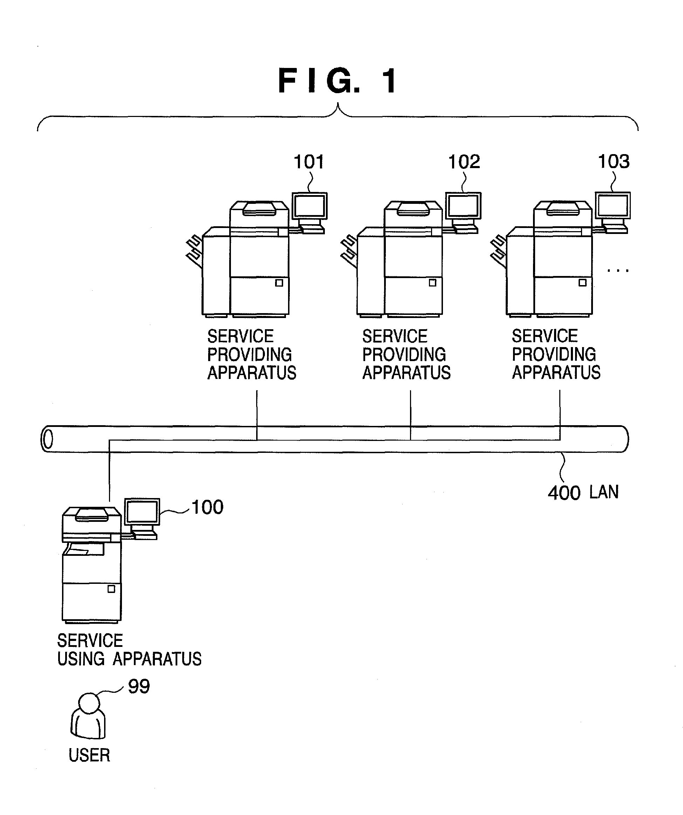

FIG. 1 shows the configuration of network system according to an embodiment of the present invention. A service using apparatus 100 and service providing apparatuses 101, 102 and 103 constituting an information processing system are connected to a LAN 400 and formulate a network. The service providing apparatuses 101, 102 and 103 each provide their respective functions externally as services. The service using apparatus 100 uses the services provided by the service providing apparatuses 101, 102 and 103 via a network, as the result of an instruction from a user 99 (or as the result of a determination made by the service using apparatus 100 itself, based on a prescribed condition).

Further, the service providing apparatuses 101, 102 and 103, in order to provide services, are also able to externally present information showing their respective services beforehand. This technology, which is realized by a service management server, involves finding information corresponding to a search request in the information presented by the service providing apparatuses and presenting the result to the user 99, as a result of the service using apparatus 100 sending a packet showing a search request to the LAN 400. The user 99 decides on a service to be used from the presented information, and actually uses the service. That is, the service providing apparatuses 101, 102 and 103 disclose their respective functions as services, and if the service using apparatus 100 wants to use these services, they can be searched for in the service using apparatus 100.

In terms of this service management technology, UDDI (Universal Description, Discovery and Integration) in Web service technology, for example, is widely known. A UDDI is a so-called service repository. Service providers register information on services they wish to disclose, such as service names, types of services, interface definitions, and access points, for example, in this UDDI. Service users are then able make inquires to the UDDI about the services available, and obtain information relating to the services. While this UDDI technology is used in the service search of the present embodiment, other methods can of course be employed.

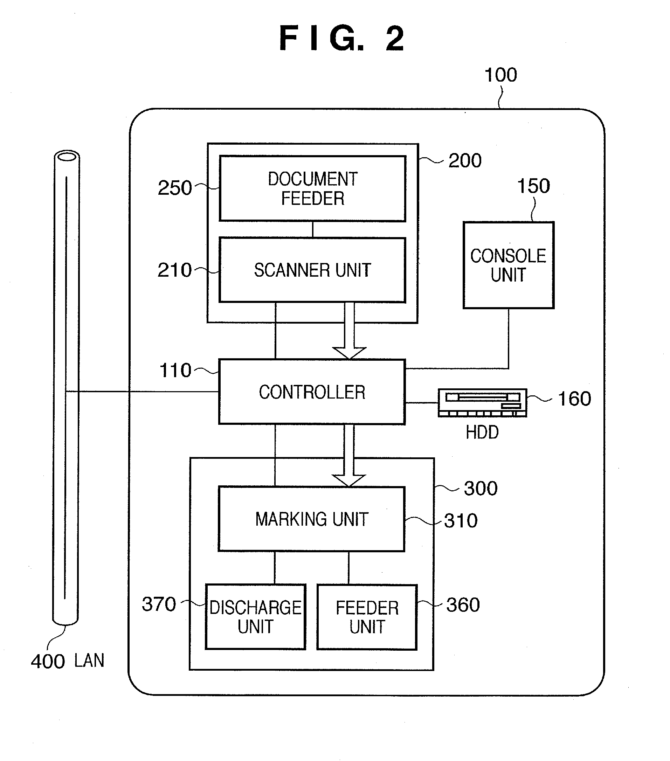

Next, an exemplary configuration of a service using apparatus will be described using FIG. 2. A reader unit 200 optically reads the image of an original and converts the read image to image data.
The reader unit 200 includes a scanner unit 210 having the function of reading an original, and an document feeder 250 having the function of conveying the sheets of the original. Depending on the device configuration, the document feeder 250 may not be included (in this case, the user places the original on a glass platen (original platen) and executes reading). A printer unit 300 transports recording paper, forms the image data on the recording paper as a visible image, and externally discharges the recording paper with the visible image formed thereon. The printer unit 300 is constituted by a feeder unit 360 that has plural types of recording paper cassettes, a marking unit 310 that transfers and fixes the image data to the recording paper, and a discharge unit 370 that sorts and staples the printed recording paper, and externally outputs the sorted and stapled recorded paper. A controller 110 is electrically connected to the reader unit 200 and the printer unit 300, and is further connected to the LAN 400. The controller 110, which has a CPU, a working memory and the like, loads program code stored in a HDD 160 into the working memory, and control the operations of the entire service using apparatus as a result of the CPU interpreting this program code. The controller 110 provides a copy function for controlling the reader unit 200 to output image data obtained by reading the image of the original to the printer unit 300, and forming an image on the recording paper. The controller 110 also provides a network scanner function for converting image data obtained by reading the image of the original with the reader unit 200 to code data, and transmitting the code data to a host computer via the LAN 400. The controller 110 further provides a printer function for converting code data received from the host computer via the LAN 400 to image data, and outputting the image data to the printer 300. A console unit 150 has an LCD display, a touch panel input apparatus stuck on the LCD display and a plurality of hard keys, and provides a user I/F for the user to perform various operations. A signal input using the touch panel or hard keys is conveyed to the controller 110, and the LCD display displays image data sent from the controller 110. Reference numeral 160 denotes a hard disk that has a storage area for saving service information and syndication data, in addition to storing program code to be executed by the controller 110. The service providing apparatuses 101, 102 and 103 are assumed to also have a similar configuration to the service using apparatus 100.

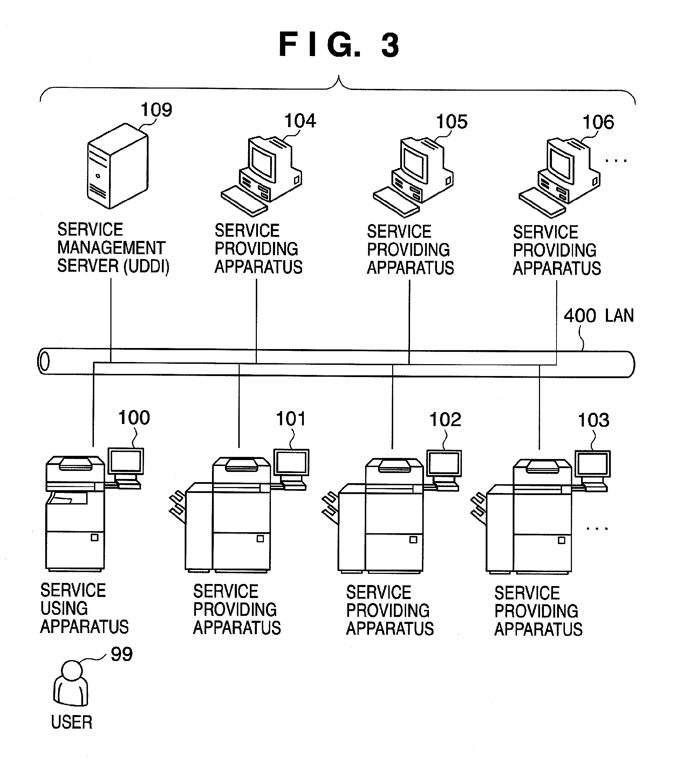

FIG. 3 shows an exemplary configuration where UDDI is used. Service providing apparatuses 104, 105 and 106, as well as service providing apparatuses 101, 102 and 103, register service information in a service management server (UDDI) 109, and the service using apparatus 100 searches the service management server (UDDI) 109. There may also be a plurality of the service management servers (UDDI) 109.

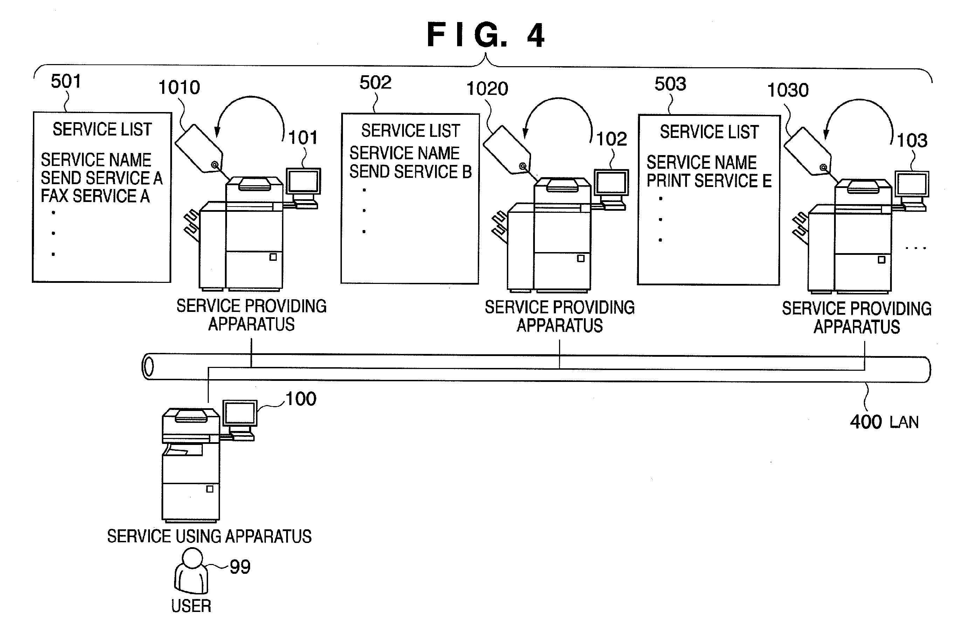

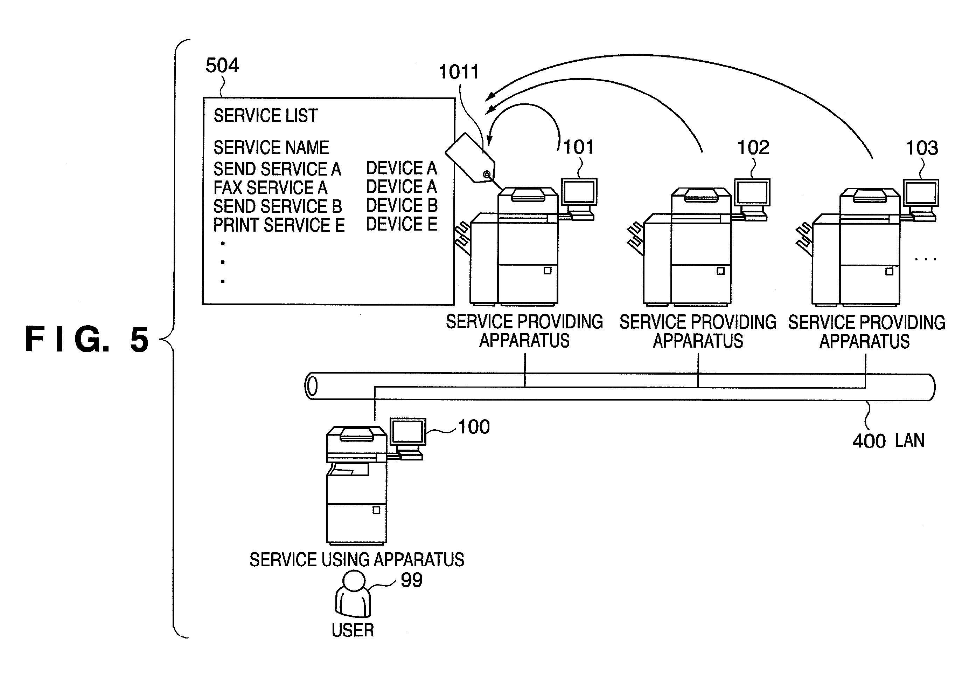

The location of the service management server corresponding to UDDI is described next using FIGS. 4 and 5. In FIG. 4 each service providing apparatus retains a service management server, while in FIG. 5 a single service providing apparatus 101 retains the service management server. The present invention is applicable to either system.

FIG. 4 shows an example where a service management server corresponding to the above-described UDDI is retained by each service providing apparatus. The service providing apparatuses 101, 102 and 103 make their respective functions available as services (i.e., available for use by other apparatuses), and register these services as a service list in their respective service management servers 1010, 1020 and 1030. Registered services are thereby enumerated and retained as in the service lists 501, 502 and 503, for example. In this case, the service using apparatus 100 searches each of the service providing apparatuses for services.

On the other hand, FIG. 5 shows an example where a service management server corresponding to the above-described UDDI is realized by only the service providing apparatus 101. The service providing apparatuses 101, 102 and 103 make their respective functions available as services (i.e., available for use by other apparatuses), and register these services as a service list 504 in the service management server 1010 deployed in the service providing apparatus 101. The service using apparatus 100 then searches only the service management server 1010 deployed in the service providing apparatus 101 for services.

In the field of Internet Web technology, XML applications such as Atom or the different versions of RSS used for syndicating (distributing) the latest news or the like have started to become heavily used.
In the present embodiment, the update/history information of services is syndicated from a service providing apparatus to a service management server using XML such as Atom or the different versions of RSS. In this specification, syndication means distributing or notifying update/summary information. Syndication data indicates browsing data for allowing update information or service information to be browsed using an RSS reader.

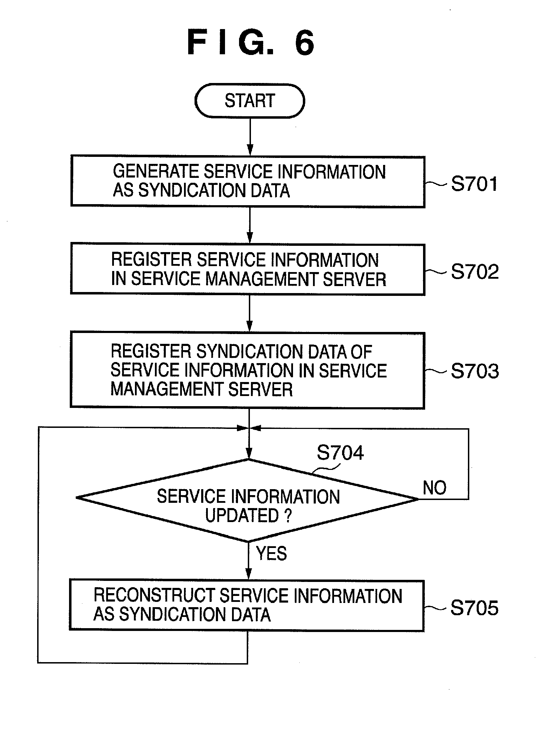

FIG. 6 is a flowchart showing the flow of processing performed by a service providing apparatus. The flowchart shows the flow of processing executed by the controller 110 based on program code stored in the HDD 160 of a service providing apparatus.

In S701, the service providing apparatus generates information on the services thereof as syndication data. In S702, the service providing apparatus transmits the service information to the service management server for registration, and at the same time transmits the syndication data created in S701 to the service management server in S703 for registration. The update information or latest information of the service information provided by the service providing apparatus can thereby be monitored by the service management server.

Here, the service information registered in S702 is referred to by the service using apparatus 100 in determining which service of the service providing apparatus to use, and is in a unique format for use only between the service using apparatus and the service providing apparatus. On the other hand, the syndication data registered in S703 is in a general-purpose format such as RSS or Atom, and can be referred to using a general-purpose RSS reader. The syndication data, however, is used only to check the content of services.

Next, in S704, the service providing apparatus determines whether there has been a change in the service information thereof or whether any new services have been added. If information on services has been updated or added, the service providing apparatus in S705 reconstructs the syndication data and reregisters the reconstructed syndication data in the service management server. The reconstruction at this time involves constructing only the updated portion. Processing then returns to S704 where the service providing apparatus monitors the updating of service information and the addition of new services. The update frequency and the scheduled update time are included in syndication data already registered in the service management server, and since the service management server inquires about updates in accordance with this information, the service providing apparatus transmits any syndication data reconstructed in S705 in response to this inquiry to the service management server for reregistration.

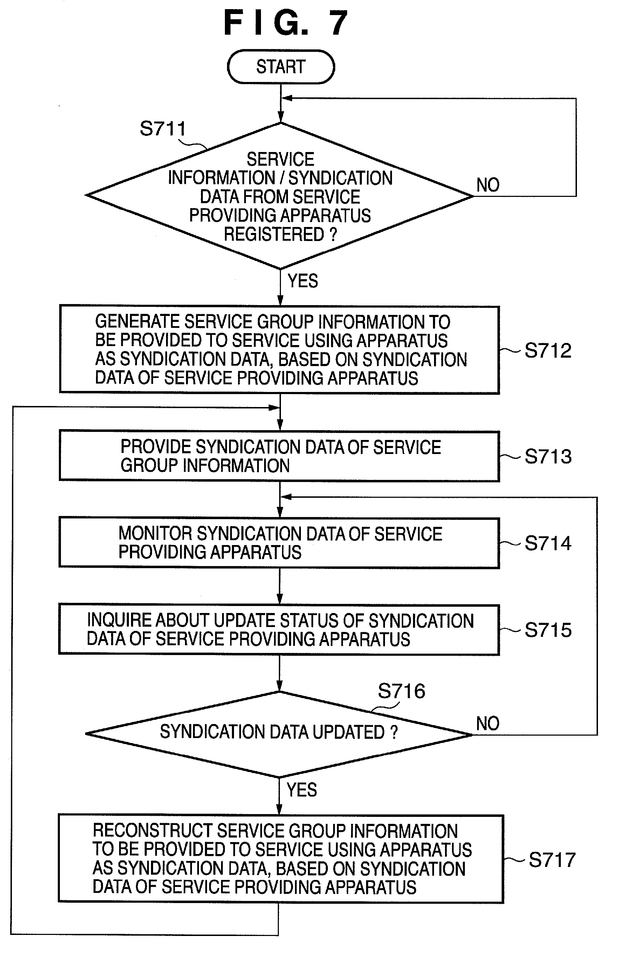

FIG. 7 illustrates the processing flow of the service management server. This flowchart shows the flow of processing executed by the controller 110 of the service management server based on program code stored in the HDD of the service management server.

In S711, the service management server determines whether service information/syndication data has been registered in the service management server by a service providing apparatus, as described in S702 and S703 of FIG. 6. Next, in S712, service group information to be provided to the service using apparatus is generated as syndication data, based on the syndication data of the service providing apparatus that has been registered in S711. At this time, there will be many pieces of service information since in many cases there is a plurality of service providing apparatuses, although the plural pieces of service information are generated as a single piece of syndication data. At this time, the syndication data is formulated to enable the user to determine which service providing apparatus is able to provide what services. In S713, the service management server starts providing this syndication data. Update information for a plurality of pieces of diverse service group information can thereby be monitored by the service using apparatus as a single piece of data. Next, in S714, the service management server starts monitoring the syndication data of the service providing apparatuses, and inquires about the update status of the syndication data in S715.

At this time, the service management server inquires periodically based on the update frequency and scheduled update time included in the syndication data. In S716, the service management server determines whether the syndication data has been updated. If the syndication data has been updated, processing proceeds to S717 where the service group information to be provided to the service using apparatus is reconstructed as syndication data. At this time, the syndication data is subjected to the reconstruction only for the updated portion. Once the reconstruction has been completed, the service management server returns to the processing for providing syndication data in S713.

It is assumed that syndication data constructed by the service management server can be referred to from any apparatus on the LAN 400 having an RSS reader function. Consequently, only by accessing the service management server using a general-purpose RSS reader is a user able to refer to all of the services that can be provided by the plurality of the service providing apparatuses on the LAN 400.

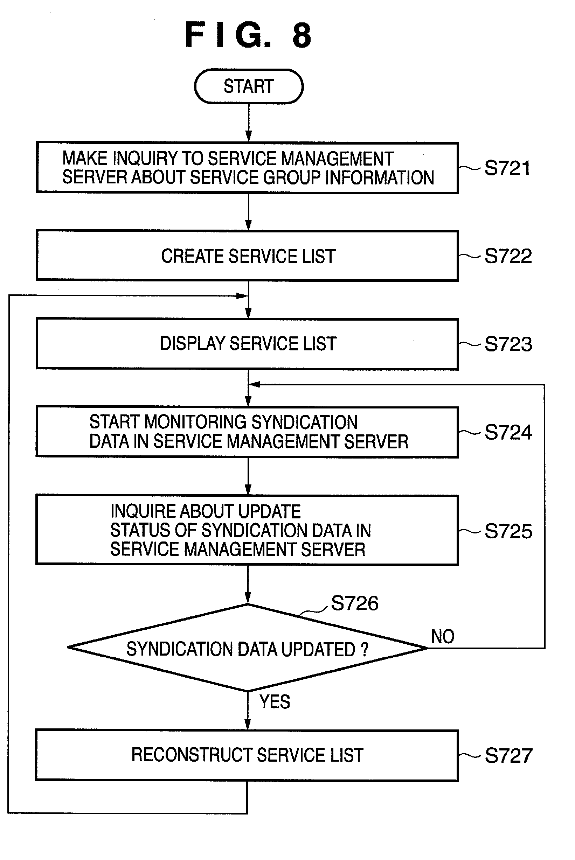

FIG. 8 illustrates the processing flow of the service using apparatus. This flowchart shows the flow of processing executed by the controller 110 based on program code stored in the HDD 160 of the service using apparatus. The service using apparatus acquires service information all at once when the apparatus is started up, for example. Acquiring the service information once when the apparatus is started up is more efficient than acquiring service information whenever the user performs a search, since the latest service information can subsequently be acquired by update information management using the syndication data. Searches may of course be performed at a different timing.

When started up, the service using apparatus in S721 makes an inquiry to the service management server about service group information usable by that apparatus, and generates a service list in S722. The service group that can be used by the service using apparatus is restricted by the functions of the service using apparatus and the functions of the service providing apparatus. If the user performs an operation to display a service list, the service list is displayed on the console unit 150 in S723. Then, in S724, the service using apparatus starts monitoring the syndication data in the service management server, and inquires about the update status of the syndication data in S725. At this time, the inquiry is made periodically based on the update frequency and scheduled update time included in the syndication data. In S726, the service using apparatus determines whether the syndication data has been updated. If the syndication data has been updated, processing proceeds to S727 where the service using apparatus reconstructs the service list. At this time, the syndication data is subjected to the reconstruction only for the updated portion. Once the reconstruction has been completed, the service using apparatus returns to the processing for displaying a service list on the console unit 150 in S723. In this case, the service list may be displayed so that the user is able determine the portion that has changed from the previous display.

It is assumed that the service list created by the service using apparatus can be referred to from any apparatus on the LAN 400 having an RSS reader function. Consequently, only by accessing the service using apparatus using a general-purpose RSS reader is a user able to refer to the services that can be provided by a plurality of service providing apparatuses on the LAN 400 to the service using apparatus.

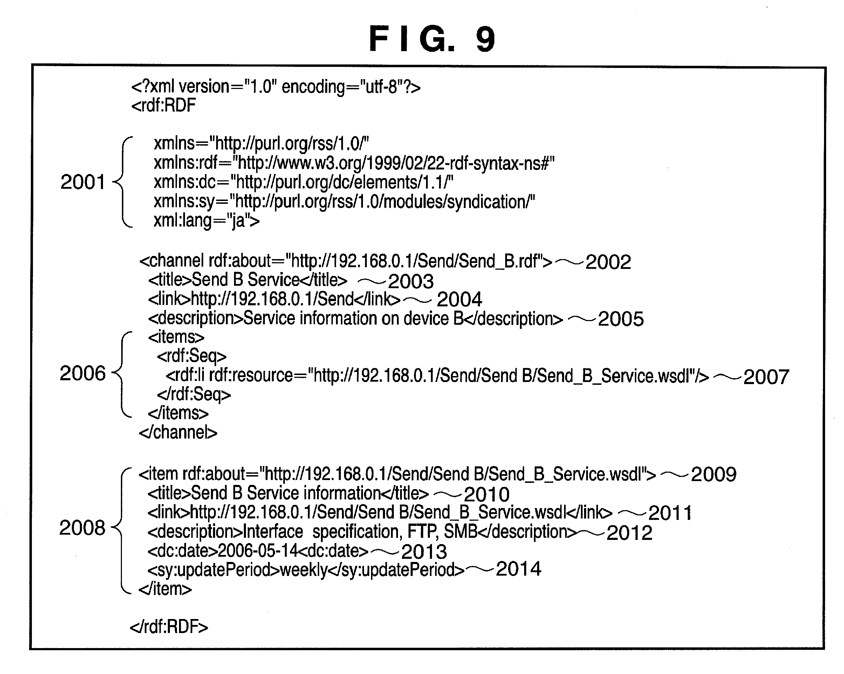

FIG. 9 shows exemplary syndication data (synchronous data) for service information generated by the service providing apparatus 101 in S701 of FIG. 6. Here, the syndication data is described as metadata in RSS 1.0 format, although the present invention is not limited to this configuration. The syndication data may alternatively be described in RSS 2.0 or Atom format, or the like.

The reference numeral 2001 denotes the definition of a namespace for maintaining the uniqueness of the vocabulary used in the data. The reference numeral 2002 denotes a channel element that contains the URI of the syndication data as an attribute. The reference numeral 2003 denotes a title element, which is the title of the data. In the case of FIG. 9, it is revealed that the data relates to a "Send B" service. The reference numeral 2004 denotes a link element that contains the URI of the "Send B" service. The reference numeral 2005 denotes a description element that contains a description of the data. In the case of FIG. 9, the description element 2005 shows that the data is service information on device B (service providing apparatus 102). The reference numeral 2006 denotes an items element, with the resource data (URI) enumerated by the following item element being written in an element 2007. If there is a plurality of item elements, plural pieces of resource data (URIs) will be described.

The reference numeral 2008 denotes an item element that contains a detailed description of the syndication data. The reference numeral 2009 denotes an item element that contains specific resource data (URI) described in the item element as an attribute thereof. The reference numeral 2010 denotes a title element that, in the case of FIG. 9, shows that the data is information relating to the "Send B" service. The reference numeral 2011 denotes resource data (URI) to be actually accessed, this being the same URI as that described in the item element 2009. The reference numeral 2012 denotes a description element that contains a description of the item. In the present embodiment, this description element contains service content supported by each service, which in the case of the Send service, for example, is the protocol information of the service. In FIG. 9, it can be seen that the FTP protocol and the SMB protocol are supported in the "Send B" service. The reference numeral 2013 denotes a dc:date element that contains date information (here, May 14, 2006) showing when the data was created (updated). The reference numeral 2014 denotes a sy:updatePeriod element that contains the data update period (here, 1 week). The service management server that acquires the syndication data is able to judge in S715 in FIG. 7, for example, when next to acquire data, using both the elements 2013 and 2014.

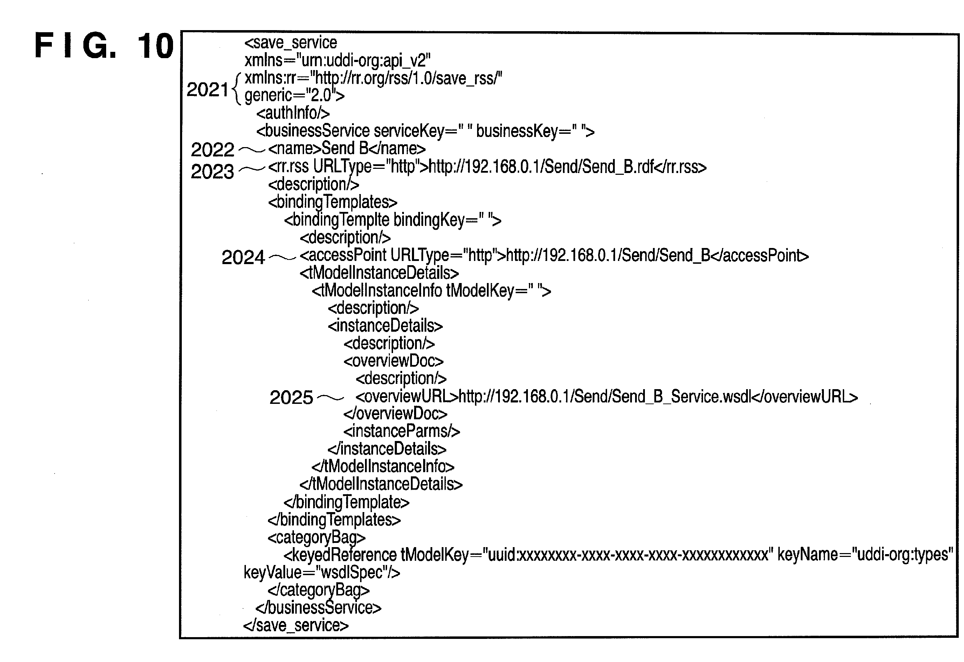

Exemplary data in the case where service information and syndication data for the service information are registered in the service management server in S702 and S703 will be described next. In FIG. 10, the namespace is defined by 2021. Here, a unique namespace rr is also defined because of the schema being extended in order to register syndication data. The reference numeral 2022 denotes a name element that registers the service name. In FIG. 10, the service is registered under the service name "Send B". The reference numeral 2023 denotes an rr:rss element, which here registers the syndication data illustrated in FIG. 9 by describing the URI of the syndication data. The reference numeral 2024 denotes an accessPoint element that contains the URI to be accessed when the actual service is operated. The reference numeral 2025 denotes an overviewURL element that shows the location (URI) of a WSDL file containing the interface definition information of the service. This processing results in the service management server proceeding from a state of waiting for registration in S711 to the syndication data generation of S712.

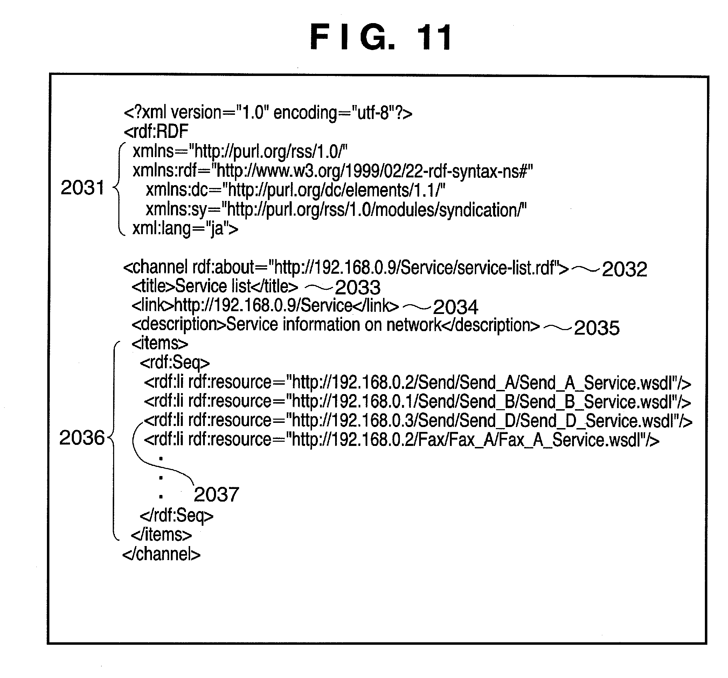

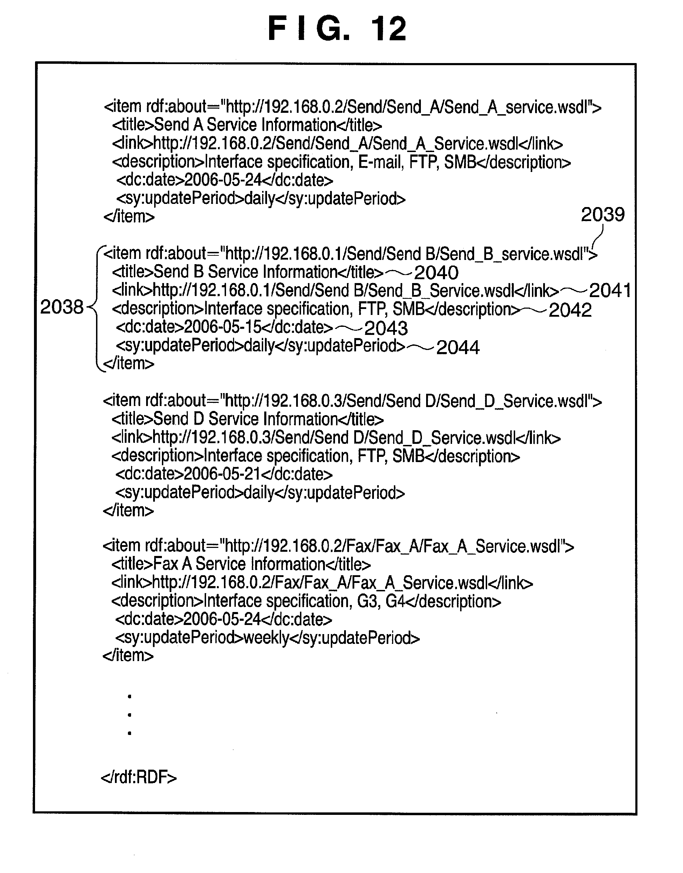

Next, the syndication data generation processing of S712 in FIG. 7 will be described with reference to FIGS. 11 and 12. FIGS. 11 and 12 show a single piece of data. Elements up to the channel element are described in FIG. 11, while item elements are mainly described in FIG. 12.

FIGS. 11 and 12 show exemplary data obtained by the service management server generating a plurality of pieces of service group information as syndication data in S712 of FIG. 7. The reference numeral 2031 denotes the definition of a namespace for maintaining the uniqueness of the vocabulary used in the data. The reference numeral 2032 denotes a channel element that contains the URI of the syndication data as an attribute. The reference numeral 2033 denotes a title element, which is the title of the data. In the case of FIG. 11, it is revealed that the data relates to an entire service group. The reference numeral 2034 denotes a link element that contains a URI containing information about the service. The reference numeral 2035 denotes a description element that contains a description of the data. In the case of FIG. 11, the description element 2035 shows that the data is information about a service group on a network. The reference numeral 2036 denotes an item element, with the resource data (URI) enumerated by the following item elements being written in an element 2037. FIG. 11 shows only part rather than all of the service information.

The reference numeral 2038 in FIG. 12 denotes an item element that contains a detailed description of the syndication data. The reference numeral 2039 denotes an item element that contains specific resource data (URI) described in the item element as an attribute thereof. The reference numeral 2040 denotes a title element that shows that the data is information relating to the "Send B" service. The reference numeral 2041 denotes resource data (URI) to be actually accessed, this being the same URI as that described in the item element 2039. The reference numeral 2042 denotes a description element that contains a description of the item. In the present embodiment, this description element contains service content supported by each service, which in the case of the Send service, for example, is the protocol information of the service. In FIG. 11, it can be seen that the FTP protocol and the SMB protocol are supported in the "Send B" service. The reference numeral 2043 denotes a dc:date element that contains date information showing when the data was created (updated). The reference numeral 2044 denotes an sy:updatePeriod element that contains the data update period. The service using apparatus that acquires the syndication data is able to determine in S725 in FIG. 8, for example, when next to acquire data, using both the elements 2043 and 2044.

Since the item elements of other services in FIG. 12 are similar to the elements 2038 to 2044, a detailed description of these elements will be left out. Here, all of the pieces of service group information aggregated by the service management server (here, "Send A", "Send B", "Send D", "Fax A") are enumerated as item elements.

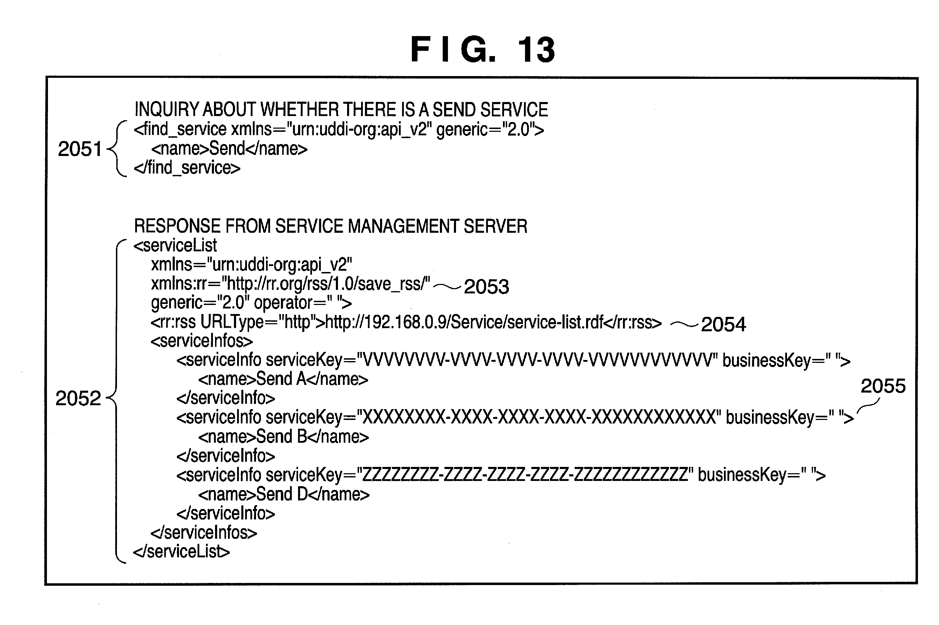

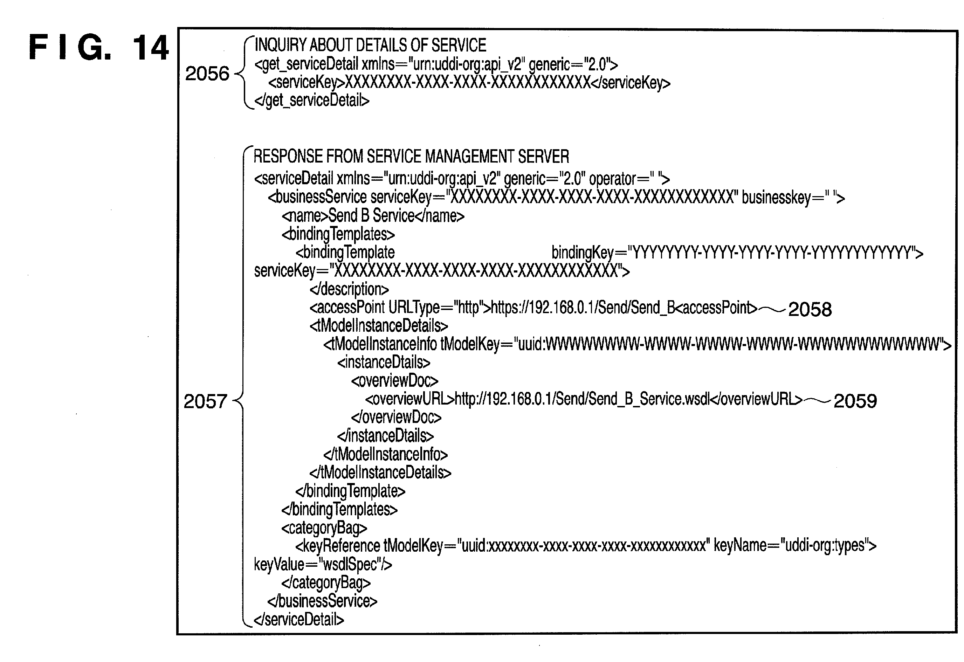

Next, the case where the service using apparatus makes an inquiry to the service management server about service information in S721 of FIG. 8 will be described with FIGS. 13 and 14. As described in S721, it is assumed that service information is acquired all at once when the device is started up, for example. Acquiring the service information once when the apparatus is started up is more efficient than acquiring service information whenever the user performs a search, since the latest service information can subsequently be acquired by update information management using the syndication data. This search is performed over two stages, firstly using the data shown in FIG. 13 to inquire as to whether there are any services, and then proceeding in FIG. 14 to acquire detailed information on the services.

The reference numeral 2051 in FIG. 13 denotes the portion where the service using apparatus makes an inquiry to the service management server. The inquiry is made using a find_service element of 2051. As a result of embedding a character string related to the service name in the name element of the find_service element of 2051, the service management server returns a service matching the character string. In this case, all of the service information is returned when "%" is used as the value of the name element. The reference numeral 2052 denotes response data from the service management server. A unique namespace rr is also defined by the reference numeral 2053 because of the schema being extended in order to monitor syndication data. The reference numeral 2054 denotes an rr:rss element that contains the URI of the syndication data for the service group managed by the service management server. serviceInfo elements are enumerated in a serviceInfos element, and information on services is returned. For example, with the serviceInfo element 2055, information on the "Send B" service is returned. As a result of including a serviceKey attribute of the serviceInfo element in the request data when acquiring detailed information as illustrated in FIG. 14, the service management server identifies the "Send B" service.

FIG. 14 is described next. The service using apparatus, when needing to acquire detailed information on services, makes an inquiry using a get_serviceDetail element of 2056. An ID obtained with the serviceKey attribute in the serviceInfo element 2055 illustrated in FIG. 13 is embedded in the serviceKey element of the get-servicedetail element of 2056. The service management server thereby identifies the "Send B" service and returns a response. At this time, the service management server uses the serviceKey allocated by the service management server to each service as an ID, considering the possible conflict of names if the service name were used as an identifier. The reference numeral 2057 denotes the response of the service management server to the inquiry. The reference numeral 2058 denotes an accessPoint element that contains the URI to be accessed when the actual service is operated. The reference numeral 2059 denotes an overviewURL element that shows the location (URI) of a WSDL file containing the interface definition information of the service. The inquiry for detailed information on services is, however, not always necessary. As illustrated in FIG. 13, information on a service group can be acquired using the syndication data shown in FIGS. 11 and 12.

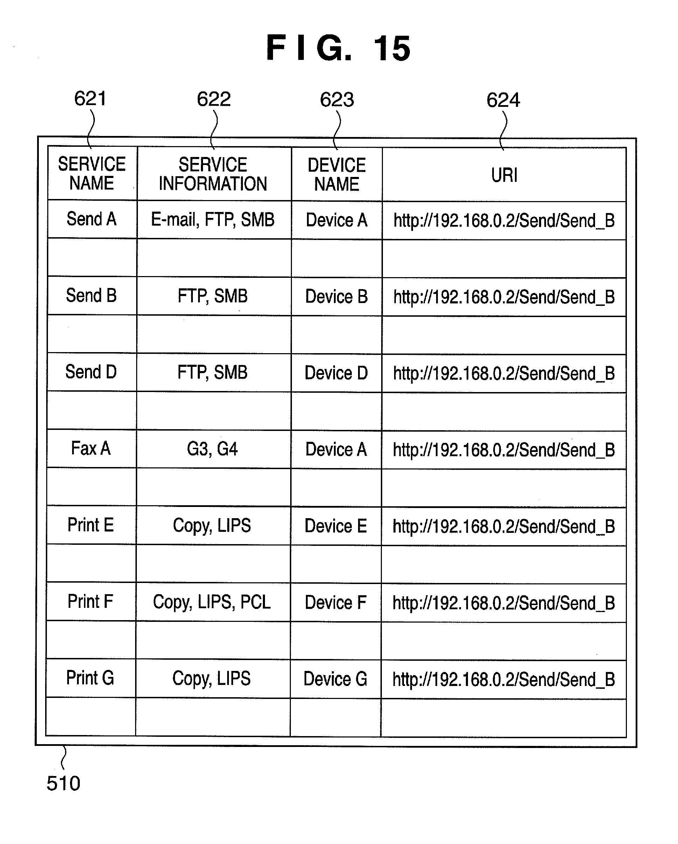

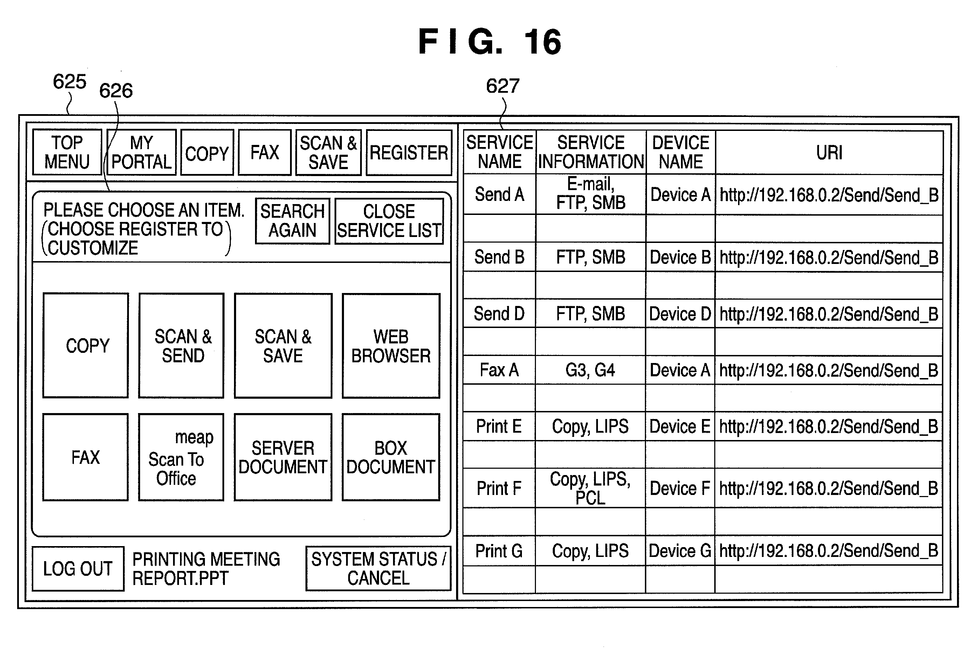

If service group information is acquired in S721 of FIG. 8 with the inquiry form of FIG. 14, the service using apparatus creates a service list 510 in S722 of FIG. 8, and displays the service list on the console unit in S723. The service list 510 is as shown in FIG. 15. Also, service list display is performed on the console unit 150, as shown in FIG. 16, based on this service list 510. The service list of FIG. 15 contains a service name 621, service information 622, a device name 623, and the URI 624 of the service. In the console unit display of FIG. 16, the reference numeral 625 shows an entire console unit screen, the reference numeral 626 denotes a field for setting a function such as copy or fax, and the reference numeral 627 denotes a service list display.

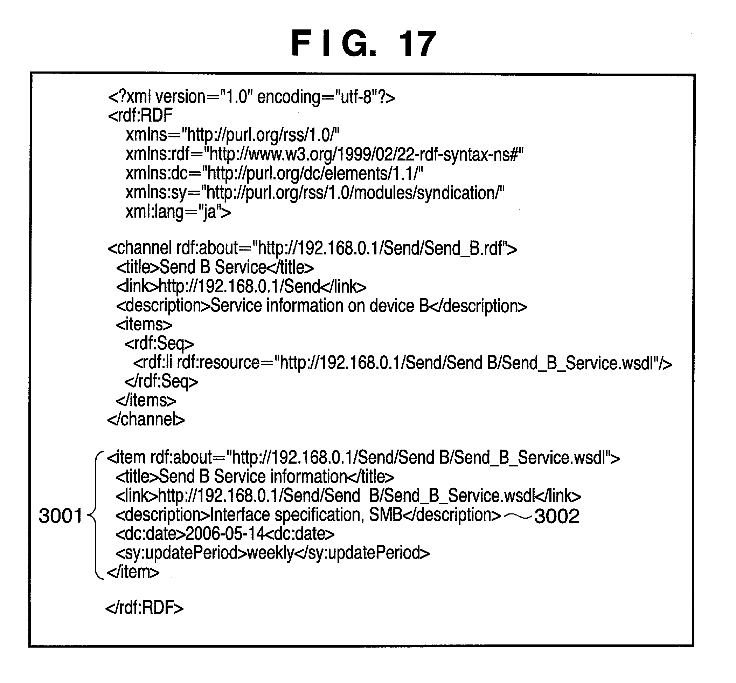

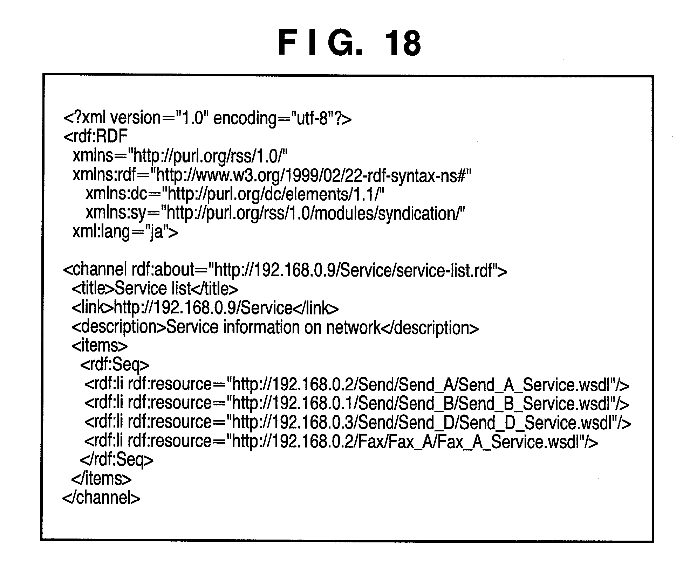

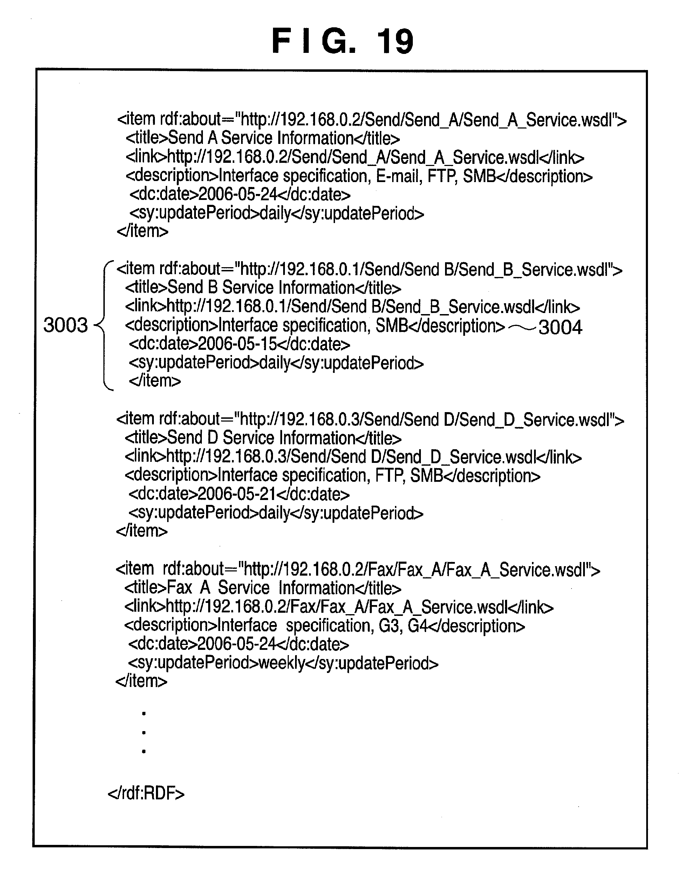

Next, the case where service information registered in a service providing apparatus is changed will be described with FIG. 17. The updating of service information in S704 of FIG. 6, involving the case where the FTP protocol can no longer be used in the "Send B" service, for example, will be described. While substantially the same as FIG. 9, the FTP description has disappeared from a description element 3002 in an item element of 3001, as a result of no longer being able to use the FTP protocol. The service management server that monitored the syndication data in S714 of FIG. 7 and made an update status inquiry in S715 thereby detects the change, and the syndication data of the service management server is reconstructed in S717. FIGS. 18 and 19 contain description of the reconstructed data. While substantially the same as FIGS. 12 and 13, the FTP description has disappeared from a description element 3004 in an item element of 3003, as a result of no longer being able to use the FTP protocol. The service using apparatus that monitored the syndication data in S724 of FIG. 8 and made an update status inquiry in S725 thereby detects the change, and reconstructs the service list in S727.

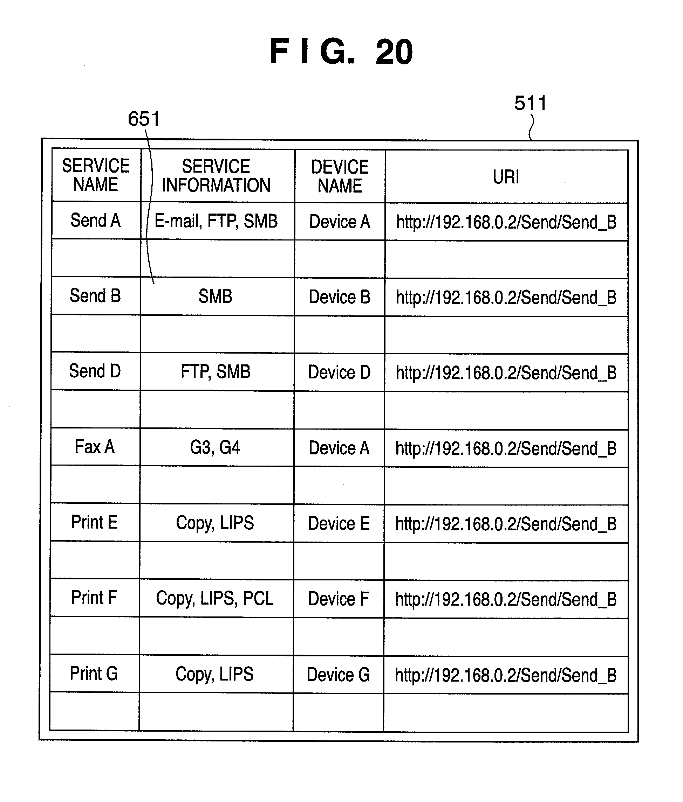

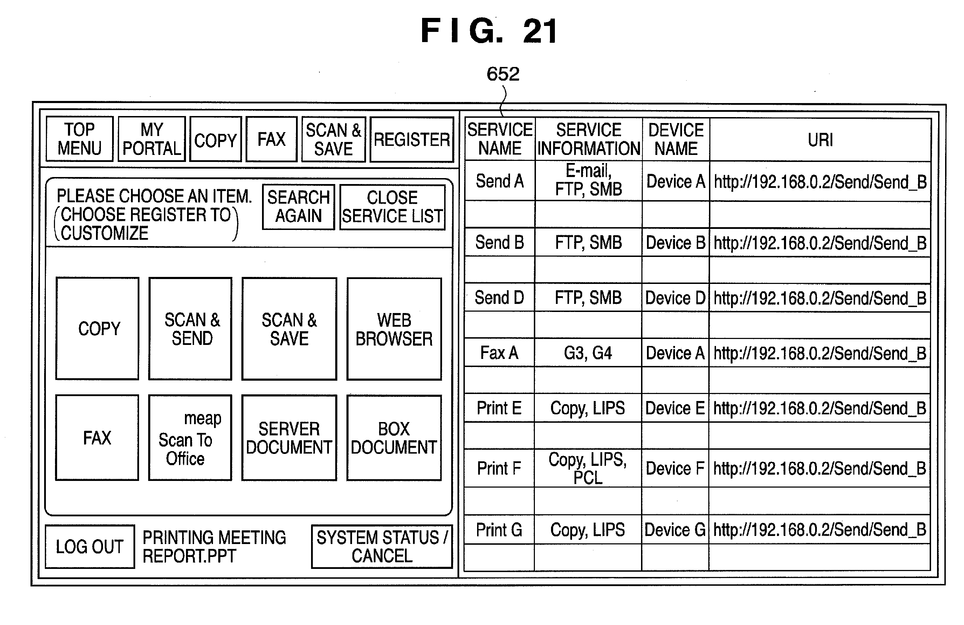

FIG. 20 contains a description of the reconstructed list. The FTP protocol has been deleted from the service information of the "Send B" service, as in service information 651 of FIG. 20. Service list display with the FTP protocol deleted is then performed, as in a service list display 652 of FIG. 21.

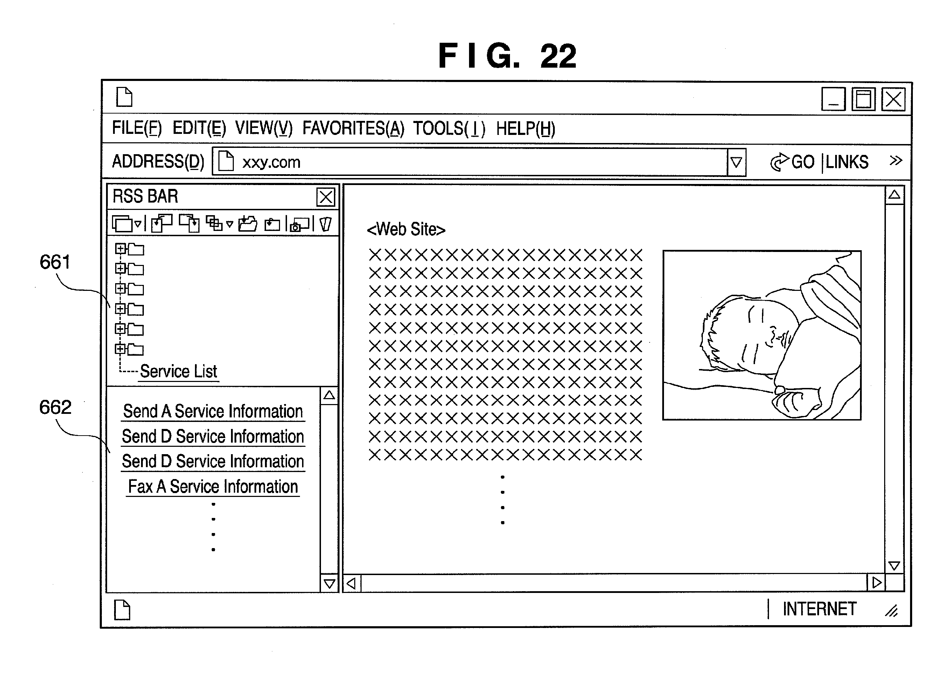

Also, FIG. 22 illustrates service information that can be browsed by a Web browser with a RSS reader function on a PC. The reference numeral 661 shows elements expressed by the Title element 2033 of the syndication data provided by the service management server illustrated in FIG. 11. Information on the service group similarly illustrated in 2037 of FIG. 11 and 2038 of FIG. 12 is enumerated in 662. Thus, by using standard technology, service information can be browsed using a common Web browser. Also, the user is able to obtain the latest information on services, even with other client software having an RSS reader function.

According to the present embodiment, the latest information on a diverse range of services in a plurality of locations can constantly be obtained merely as a result of the user making an inquiry to the service management server or the service using apparatus. While a diverse range of services in different locations are registered in the service management server, these services can easily be centrally managed by managing them as syndication data.

Also, flexible service management can be realized, since information can be provided by organizing information from the service providing apparatuses into information suitable for the service users, when the service management server aggregates information on services.

Further, since information can be acquired from a common Web browser or the like using standard technology, users can also acquire the latest information on a service group from their own PC or the like, without having to go to the service using apparatus.

### Other Embodiments

While an embodiment of the present invention has been described above, the present invention may be applied to a system constituted by a plurality of devices, or to an apparatus composed of a single device.

Note that the present invention is also accomplished as the result of a computer program for realizing the functions of the above embodiment being supplied either directly or remotely to a system or an apparatus, and the supplied program code being read and executed by the system or apparatus. Consequently, the actual program code installed on the computer in order to realize the functional processing of the present invention with a computer is also included within the technical scope of the present invention.

In this case, the computer program may take any form, such as an object code, a computer program executed by an interpreter or script data supplied to an OS, provided that the function of a computer program exists.

Storage media for supplying the computer program include, for example, Floppy (registered trademark) disk, hard disk, optical disk, and magneto optical disk. MO, CD-ROM, CD-R, CD-RW, magnetic tape, nonvolatile memory card, ROM, DVD (DVD-ROM, DVD-R) and the like can also be used.

Alternatively, it is also possible that the user connects to an Internet site using the browser of a client PC, and downloads the actual computer program according to the present invention or a file that includes an auto-install function to a storage medium such as a hard disk. The present invention can also be realized by dividing program code constituting the computer program according to the present invention into a plurality of files, and downloading the respective files from different websites. That is, a World Wide Web (WWW) server that allows a plurality of users to download computer programs for realizing the functional processing of the present invention with a computer is also included in the scope of the present invention. The computer program according to the present invention may also be delivered to a user in encrypted form stored on a storage medium such as a CD-ROM. It is also possible to allow a user that satisfies a prescribed condition to download key information for decrypting the encryption from a website via the Internet and install the computer program decrypted using this key information on a computer by executing the computer program.

Also, an OS or the like running on a computer may perform part or all of the actual processing based on the instructions of the computer program, with the functions of the above embodiment being realizable as a result of this processing.

Further, the case where the computer program according to the present invention is written to a memory provided in the function extension unit of a PC, and a CPU or the like provided in the function extension unit performs part or all of the actual processing based on the computer program is also included in the scope of the present invention.

The present invention enables the latest information on a diverse range of services on a network to be constantly acquired.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The latest information on a diverse range of services on a network is constantly acquired. To accomplish this, services from a plurality of service providing apparatuses 101, 102 and 103 on a network are provided to a service using apparatus 100. Synchronous data that describes the functions of the plurality of service providing apparatuses 101, 102 and 103 using a markup language is generated and registered. The registered synchronous data is updated if there is a change in the functions of any of the service providing apparatuses. The service using apparatus 100 acquires the registered synchronous data updated as required, generates a service list based on the acquired synchronous data, and displays the generated service list.

## Claims

1. An information processing method for providing services from a plurality of service providing apparatuses on a network to a service using apparatus, comprising the steps of:
generating browsing data that describes functions of the plurality of service providing apparatuses using a markup language;
registering the browsing data;
updating the registered browsing data as required if there is a change in the functions of any of the service providing apparatuses; and
the service using apparatus acquiring the registered browsing data updated as required, generating a service list based on the acquired browsing data, and displaying the generated service list.

2. The information processing method according to claim 1, wherein the browsing data is described using XML.

3. The information processing method according to claim 2, wherein the browsing data is described in one of RSS format and Atom format.

4. The information processing method according to claim 1, wherein the generating step includes the steps of:
the plurality of service providing apparatuses each generating browsing data that describes respective functions thereof using a markup language; and
combining a plural pieces of the browsing data generated by the plurality of service providing apparatuses.

5. An information processing system for providing services from a plurality of service providing apparatuses on a network to a service using apparatus, comprising:
a generation unit adapted to generate browsing data that describes functions of the plurality of service providing apparatuses using a markup language;
a registration unit adapted to register the browsing data;
an update unit adapted to update the registered browsing data if there is a change in the functions of any of the service providing apparatuses; and
a service list display unit in the service using apparatus adapted to acquire the registered browsing data, generate a service list based on the acquired browsing data, and display the generated service list.

6. A computer-readable storage medium storing an information processing program for providing services from a plurality of service providing apparatuses on a network to a service using apparatus, the information processing program causing a computer to execute the steps of:
generating browsing data that describes functions of the plurality of service providing apparatuses using a markup language;
registering the browsing data;
updating the registered browsing data if there is a change in the functions of any of the service providing apparatuses; and
the service using apparatus acquiring the registered browsing data updated as required, generating a service list based on the acquired browsing data, and displaying the generated service list.
